# EUROPEAN PATENT APPLICATION

(11) **EP 3 318 990 A1**
(43) Date of publication of application: **09.05.2018**
(21) Application number: 16817060.3
(22) Date of filing: 18.05.2016
(51) Int. Cl.: G06F 17/30, H04M 3/51, H04M 7/00

(54) **INTERACTIVE PROCESSING METHOD AND DEVICE**

(30) Priority: 30.06.2015 CN 201510374798
(71) Applicant: ZTE Corporation, Shenzhen, Guangdong 518057 (CN)
(72) Inventor: DONG, Hao, Shenzhen Guangdong 518057 (CN)
(74) Representative: Deambrogi, Edgardo
(86) International application number: PCT/CN2016/082525
(87) International publication number: WO 2017/000696

(57) **Abstract**

An interactive processing method and device are provided. In the interactive processing method, a request operation for requesting acquisition of an Interactive Voice Response (IVR) voice or a Web page is received; a request for acquiring a Web page corresponding to the IVR voice or a request for acquiring an IVR voice corresponding to the Web page is initiated according to a mapping relationship between the Web page and the IVR voice; and the Web page and the IVR voice are displayed to a user. The interactive processing method and device solve a problem in related technologies that a Web page and an IVR voice cannot be displayed synchronously, and can display a Web page and an IVR voice associated with each other at the same time, thereby realizing the synchronization of the Web page and the IVR voice.

## Description

### Technical Field

The present disclosure relates to, but is not limited to, the field of communications, and in particular to an interactive processing method and device.

### Background

With the development of science and technology, a Web based Real-Time Communication (WebRTC) technology becomes more and more mature. Because of the advantages of the WebRTC technology like being cross-platform, high popularity degree and being easy to develop application programs, the WebRTC market has been developed quickly. In related technologies, during a process of communication via phone, a user may make a personal call or a call between the user and an Interactive Voice Response (IVR) system of an enterprise's call center. In both types of calls, merely monotonous voice communications are conducted. In this scenario, the user may want to operate the call and content. For example, in a process of accessing the IVR system, the user may select a button according to a voice prompt to enter the next menu. Moreover, the user may click the browsed content to further obtain the new content, for example, the user may obtain a new Web page after clicking a certain link on a Web page. In related technologies, an IVR communication and a Web page may be associated with each other, but synchronization of a Web page and an IVR voice cannot be realized, that is, the associated Web page and the IVR voice cannot be displayed synchronously.

In view of a problem in related technologies that a Web page and an IVR voice cannot be displayed synchronously, an effective solution has not been presented yet.

### Summary

The following is an overview of the subject matter elaborated in the present disclosure. The overview is not intended to limit the scope of protection of the claims.

Some embodiments of the present disclosure provide an interactive processing method and device.

According to an embodiment of the present disclosure, an interactive processing method is provided, which may include the following acts. A request operation for requesting acquisition of an IVR voice or a Web page may be received. A request for acquiring a Web page corresponding to the IVR voice or a request for acquiring an IVR voice corresponding to the Web page may be initiated according to a mapping relationship between the Web page and the IVR voice. The Web page and the IVR voice may be displayed to a user.

The mapping relationship between the Web page and the IVR voice may include a mapping relationship among a Uniform Resource Locator (URL) of the Web page, an IVR node and a Dual Tone Multiple Frequency (DTMF) code.

The act that the request for acquiring the Web page corresponding to the IVR voice is initiated according to the mapping relationship may be implemented in a manner as follows. A DTMF code corresponding to the IVR voice may be determined according to the request operation. A URL of the Web page corresponding to the IVR voice may be acquired from the mapping relationship according to the DTMF code. The Web page may be acquired according to the URL of the Web page.

The act that the request for acquiring the IVR voice corresponding to the Web page is initiated according to the mapping relationship may be implemented in a manner as follows. A DTMF code of an IVR node corresponding to a URL of the Web page may be acquired according to the mapping relationship. The request for acquiring the IVR voice corresponding to the Web page may be sent to an IVR server according to the DTMF code. The IVR voice corresponding to the Web page, which is returned by the IVR server, may be acquired.

Before the request for acquiring the Web page corresponding to the IVR voice or the request for acquiring the IVR voice corresponding to the Web page is initiated according to a mapping relationship, the method may also include an act of downloading the mapping relationship.

Before the Web page and the IVR voice are displayed to the user, the method may also include one of the following acts. A DTMF code corresponding to the IVR voice may be generated according to the request operation, and the IVR voice may be acquired from an IVR server according to the DTMF code. Alternatively, the Web page may be acquired from a Web server according to the request operation.

The mapping relationship may include a mapping relationship recorded in a form of a table.

The mapping relationship may include a mapping relationship recorded in a form of an Extensible Markup Language (XML) file.

The act that the Web page and the IVR voice are displayed to the user may include one of the following alternative acts. The Web page and the corresponding IVR voice, which are acquired through the request according to the mapping relationship, may be displayed to the user. The IVR voice and the corresponding Web page, which are acquired through the request according to the mapping relationship, may be displayed to the user.

According to another embodiment of the present disclosure, an interactive processing device is provided, which may include a receiving module, a first acquiring module and a displaying module. The receiving module may be configured to receive a request operation for requesting acquisition of an IVR voice or a Web page. The first acquiring module may be configured to initiate a request for acquiring a Web page corresponding to the IVR voice or a request for acquiring an IVR voice corresponding to the Web page according to a mapping relationship between the Web page and the IVR voice. The displaying module may be configured to display the Web page and the IVR voice to the user.

The mapping relationship between the Web page and the IVR voice may include a mapping relationship among the URL of the Web page, the IVR node and the DTMF code.

When the request for acquiring the Web page corresponding to the IVR voice is initiated according to the mapping relationship, the first acquiring module may include a determining unit, a first acquiring unit and a second acquiring unit. The determining unit may be configured to determine a DTMF code corresponding to the IVR voice according to the request operation. The first acquiring unit may be configured to acquire a URL of the Web page corresponding to the IVR voice from the mapping relationship according to the DTMF code. The second acquiring unit may be configured to acquire the Web page according to the URL of the Web page.

The first acquiring module may include a third acquiring unit, a sending unit and a fourth acquiring unit. The third acquiring unit may be configured to acquire a DTMF code of an IVR node corresponding to a URL of the Web page according to the mapping relationship. The sending unit may be configured to send the request for acquiring the IVR voice corresponding to the Web page to the IVR server according to the DTMF code. The fourth acquiring unit may be configured to acquire the IVR voice corresponding to the Web page, which is returned by the IVR server.

The device may further include a downloading module. The downloading module may be configured to download the mapping relationship.

The device may further include a second acquiring module or a third acquiring module. The second acquiring module may be configured to generate a DTMF code corresponding to the IVR voice according to the request operation, and acquire the IVR voice from an IVR server according to the DTMF code. The third acquiring module may be configured to acquire the Web page from a Web server according to the request operation.

The mapping relationship may include a mapping relationship recorded in a form of a table.

The mapping relationship may include a mapping relationship recorded in a form of an XML file.

According to the embodiment of the present disclosure, a request operation for requesting acquisition of an IVR voice or a Web page may be received; a request for acquiring a Web page corresponding to the IVR voice or a request for acquiring an IVR voice corresponding to the Web page may be initiated according to a mapping relationship between the Web page and the IVR voice; and the Web page and the IVR voice may be displayed to the user. By virtue of this solution, a problem in related technologies that a Web page and an IVR voice cannot be displayed synchronously is solved, the Web page and the IVR voice associated with each other can be displayed at the same time, thereby realizing the synchronization of the Web page and the IVR voice.

The displaying module may be configured to display the Web page and the corresponding IVR voice, which are acquired through the request according to the mapping relationship, to the user, or display the IVR voice and the corresponding Web page, which are acquired through the request according to the mapping relationship, to the user.

According to another embodiment of the present disclosure, a computer readable storage medium is provided, in which a computer executable instruction may be stored. The computer executable instruction may perform the above method when being executed by a processor.

Other aspects can be understood after the accompanying drawings and detailed descriptions are read and understood.

### Brief Description of the Drawings

The accompanying drawings described here are used for providing a deeper understanding of the present disclosure, and constitute a part of the application. Schematic embodiments of the present disclosure and description thereof are used for illustrating the present disclosure and not intended to form an improper limit to the present disclosure. In the accompanying drawings:
Fig. 1 is a flowchart of an interactive processing method according to an embodiment of the present disclosure;
Fig. 2 is a structure diagram of an interactive processing device according to an embodiment of the present disclosure;
Fig. 3 is another structure diagram of the interactive processing device according to an embodiment of the present disclosure;
Fig. 4 is another structure diagram of the interactive processing device according to an embodiment of the present disclosure;
Fig. 5 is another structure diagram of the interactive processing device according to an embodiment of the present disclosure;
Fig. 6 is another structure diagram of the interactive processing device according to an embodiment of the present disclosure;
Fig. 7 is a system architecture diagram according to an embodiment of the present disclosure;
Fig. 8 is a structure diagram of a browser according to an embodiment of the present disclosure;
Fig. 9 is a structure diagram of a Web server according to an embodiment of the present disclosure;
Fig. 10 is a flowchart of querying a mapping table according to an embodiment of the present disclosure;
Fig. 11 is a flowchart of downloading a mapping table according to an exemplary embodiment of the present disclosure;
Fig. 12 is a flowchart that a user performs a Web page operation according to an embodiment of the present disclosure; and
Fig. 13 is a flowchart that a user performs an IVR key operation according to an embodiment of the present disclosure.

### Detailed Description of the Embodiments

The present disclosure is elaborated below with reference to the accompanying drawings and embodiments. Note that, the embodiments of the present disclosure and the characteristics in the embodiments can be combined under the condition of no conflicts.

Note that, the terms like "first" and "second" in the specification, the claims and the accompanying drawings of the present disclosure are used for differentiating the similar objects, but do not have to describe a specific order or a sequence.

With the development of science and technology, a user may want to see the content related to a call on a terminal screen, and the improvement of terminal performance (including processing capacity, screen size, and so on) and the improvement of bandwidth may establish the foundation for this trend. For example, except providing voice calls to the user, taking the advantage of an inherent Webpage content browsing function, a Web based IVR system may enable two kinds of user services, namely communication by phone and content browsing, to be combined perfectly. An elaboration is give below in combination with embodiments.

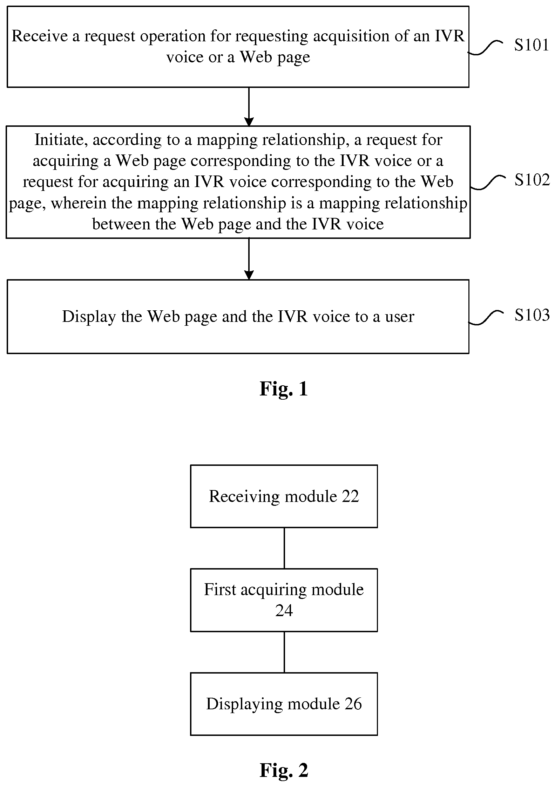

In an embodiment of the present disclosure, an interactive processing method is provided. Fig. 1 is a flowchart of an interactive processing method according to an embodiment of the present disclosure. As shown in Fig. 1, the flow may include acts S101 to S103.

At act S101, a request operation for requesting acquisition of an IVR voice or a Web page may be received.

At act S102, a request for acquiring a Web page corresponding to the IVR voice or a request for acquiring an IVR voice corresponding to the Web page may be initiated according to a mapping relationship between the Web page and the IVR voice.

At act S103, the Web page and the IVR voice may be displayed to a user.

As an exemplary implementation mode, the Web page and the corresponding IVR voice, which are acquired through the request according to the mapping relationship, may be displayed to the user; or, the IVR voice and the corresponding Web page, which are acquired through the request according to the mapping relationship, may be displayed to the user.

The above flow may be performed by a browser. Through the above acts, after the request operation used for requesting acquisition of the IVR voice or the Web page is received, the Web page corresponding to the IVR voice or the IVR voice corresponding to the Web page may be acquired according to the mapping relationship, and the Web page and the IVR voice may be displayed to the user. By virtue of this solution, the synchronization of the Web page and the IVR voice may be realized, and a problem in related technologies that the Web page and the IVR voice cannot be displayed synchronously may be solved, thereby achieving the effect of displaying the Web page and the IVR voice associated with each other at the same time.

In an embodiment of the present disclosure, the mapping relationship between the Web page and the IVR voice may include a mapping relationship among the URL of the Web page, the IVR node and the DTMF code.

In an embodiment of the present disclosure, the act that the request for acquiring the Web page corresponding to the IVR voice is initiated according to the mapping relationship may be implemented in a manner as follows. A DTMF code corresponding to the IVR voice may be determined according to the request operation. A URL of the Web page corresponding to the IVR voice may be acquired from the mapping relationship according to the DTMF code. The Web page may be acquired according to the URL of the Web page.

In an embodiment of the present disclosure, the act that the request for acquiring the IVR voice corresponding to the Web page is initiated according to the mapping relationship may be implemented in a manner as follows. A DTMF code of an IVR node corresponding to a URL of the Web page may be acquired according to the mapping relationship. The request for acquiring the IVR voice corresponding to the Web page may be sent to the IVR server according to the DTMF code. The IVR voice corresponding to the Web page, which is returned by the IVR server, may be acquired.

In an embodiment of the present disclosure, before the request for acquiring the Web page corresponding to the IVR voice or the request for acquiring the IVR voice corresponding to the Web page is initiated according to the mapping relationship, the method may also include an act of downloading the mapping relationship. The mapping relationship may be downloaded from a Web server or acquired from other servers or other devices.

In an embodiment of the present disclosure, before the Web page and the IVR voice are displayed to the user, the method may also include one of the following acts. A DTMF code corresponding to the IVR voice may be generated according to the request operation, and the IVR voice may be acquired from an IVR server according to the DTMF code. Alternatively, the Web page may be acquired from a Web server according to the request operation. There may be multiple sequences of acquiring the IVR voice and acquiring the Web page corresponding to the IVR voice. It may be feasible to first acquire the IVR voice and then acquire the Web page corresponding to the IVR voice, or first acquire the Web page corresponding to the IVR voice and then acquire the IVR voice, or acquire the IVR voice and the Web page corresponding to the IVR voice at the same time. Similarly, when the Web page is acquired, the sequences of acquiring the Web page and acquiring the IVR voice corresponding to the Web page may follow any of the above three sequences.

In an embodiment of the present disclosure, the mapping relationship may include a mapping relationship recorded in a form of a table, namely, the mapping relationship may be recorded in a mapping relationship table. The mapping relationship may also be recorded in other ways, for example, the corresponding relationship may be recorded in a form of an XML file.

Through the above description of the embodiments, those skilled in the art can clearly know that the method in the above embodiment can be realized by means of software plus necessary general hardware platform. The method may alternatively be realized through hardware. In some cases, the former may be a better implementation mode. Based on this understanding, the solutions of the present disclosure substantially or the part making a contribution to the prior art may be embodied in the form of software products. The computer software product may be stored in a storage medium (e.g. ROM/RAM, a magnetic disk, and a compact disc) and may include a number of instructions to make a terminal device (which can be a mobile phone, a computer, a server or a network device, etc.) perform the method in each embodiment of the present disclosure.

In an embodiment of the present disclosure, an interactive processing device is also provided, which may be configured to implement the above embodiments and exemplary implementation modes, which will not be elaborated herein. The term "module" used below can realize a combination of software and/or hardware with an intended function. Although the device described in the following embodiment is realized through software better, the realization through hardware or a combination of software and hardware is possible and conceived.

Fig. 2 is a structure diagram of the interactive processing device according to an embodiment of the present disclosure. As shown in Fig. 2, the device may include a receiving module 22, a first acquiring module 24 and a displaying module 26. The device is elaborated below.

The receiving module 22 may be configured to receive a request operation for requesting acquisition of an IVR voice or a Web page. The first acquiring module 24 may be connected to the receiving module 22 and may be configured to initiate a request for acquiring a Web page corresponding to the IVR voice or the request for acquiring the IVR voice corresponding to the Web page according to a mapping relationship between the Web page and the IVR voice. The displaying module 26 may be connected to the first acquiring module 24 and may be configured to display the Web page and the IVR voice to a user.

The mapping relationship between the Web page and the IVR voice may include a mapping relationship among the URL of the Web page, the IVR node and the DTMF code.

Specifically, the displaying module 26 may be configured to display the Web page and the corresponding IVR voice, which are acquired through the request according to the mapping relationship, to the user, or display the IVR voice and the corresponding Web page, which are acquired through the request according to the mapping relationship, to the user.

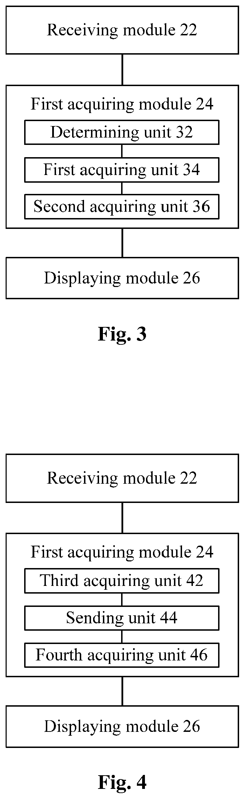

Fig. 3 is another structure diagram of the interactive processing device according to an embodiment of the present disclosure. As shown in Fig. 3, when the request for acquiring the Web page corresponding to the IVR voice is initiated according to the mapping relationship, the first acquiring module 24 may include a determining unit 32, a first acquiring unit 34 and a second acquiring unit 36. The units included in the first acquiring module 24 are elaborated below.

The determining unit 32 may be configured to determine a DTMF code corresponding to the IVR voice according to the request operation. The first acquiring unit 34 may be connected to the determining unit 32 and may be configured to acquire a URL of the Web page corresponding to the IVR voice from the mapping relationship according to the DTMF code. The second acquiring unit 36 may be connected to the first acquiring unit 34 and may be configured to acquire the Web page according to the URL of the Web page.

Fig. 4 is another structure diagram of the interactive processing device according to an embodiment of the present disclosure. As shown in Fig. 4, when the request for acquiring the IVR voice corresponding to the Web page is initiated according to the mapping relationship, the first acquiring module 24 may include a third acquiring unit 42, a sending unit 44 and a fourth acquiring unit 46. The units included in the first acquiring module 24 are elaborated below.

The third acquiring unit 42 may be configured to acquire a DTMF code of an IVR node corresponding to a URL of the Web page according to the mapping relationship. The sending unit 44 may be connected to the third acquiring unit 42 and may be configured to send the request for acquiring the IVR voice corresponding to the Web page to the IVR server according to the DTMF code. The fourth acquiring unit 46 may be connected to the sending unit 44 and may be configured to acquire the IVR voice corresponding to the Web page, which is returned by the IVR server.

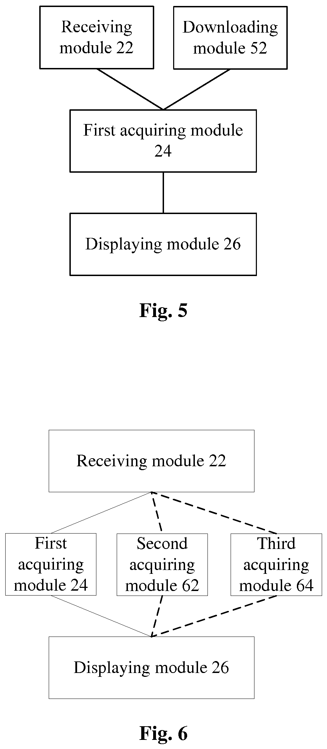

Fig. 5 is another structure diagram of the interactive processing device according to an embodiment of the present disclosure. As shown in Fig. 5, except all the modules shown in Fig. 2, the device may further include a downloading module 52. The device is elaborated below.

The downloading module 52 may be connected to the first acquiring module 24 and may be configured to download the mapping relationship.

Fig. 6 is another structure diagram of the interactive processing device according to an embodiment of the present disclosure. As shown in Fig. 6, except all the modules shown in Fig. 2, the device may further include a second acquiring module 62 or a third acquiring module 64. The device is elaborated below.

The second acquiring module 62 may be connected to the receiving module 22 and the displaying module 26, and may be configured to generate a DTMF code corresponding to the IVR voice according to the request operation, and acquire the IVR voice from an IVR server according to the DTMF code. The third acquiring module 64 may be connected to the receiving module 22 and the displaying module 26, and may be configured to acquire the Web page from a Web server according to the request operation.

The mapping relationship may include a mapping relationship recorded in a form of a table.

The mapping relationship may also include a mapping relationship recorded in a form of an XML file.

By taking that visual IVR is realized through a browser for example, how to solve a problem in related technologies that the synchronization of the IVR voice and the associated Web page cannot be realized is elaborated below.

According to an embodiment of the present disclosure, a Web based visual IVR system is provided.

The system in the embodiment of the present disclosure may include a browser, a Web server and an IVR server. The browser may be configured to acquire the Web page and display the Web page to the user on one hand, and complete a function of calling a client on the other hand.

The Web server may be configured to provide the Web page to the browser on one hand, and receive and process, as a call server, a call request initiated by the browser on the other hand.

The IVR server may be configured to provide a voice media to the browser, and receive a user input instruction to send a new voice.

In order to complete a visual IVR function of the present disclosure, the browser may further be configured to acquire form the Web server a mapping table of the mapping relationship among the URL of the Web page, the IVR node and the DTMF code. An operation of clicking input on the Web (or touching and other operations) of the user may be received, and a new Web page corresponding to the Web URL may be requested from the Web server. A mapping table (which may be configured to record the mapping relationship, the mapping relationship may also be recorded in other ways) may be queried to acquire the DTMF code of the IVR node. The DTMF code may be sent to the IVR server to acquire the new IVR voice. In addition, a key input of the user according to an IVR voice prompt may be received, and the DTMF code may be generated and sent to the IVR server to acquire the new IVR voice; at the same time, the mapping table may be queried to acquire the corresponding Web URL, and a new Web page may be requested from the Web server.

The Web server may further be configured to store the mapping table, and provide the mapping table to the browser after receiving the request from the browser.

According to another embodiment of the embodiment of the present disclosure, a method for Web based visual IVR is also provided.

The method may include the following acts. A browser may download from a Web server a mapping table of a mapping relationship among a URL of a Web page, an IVR node and a DTMF code. When the user browses the Web page and receives the IVR voice, on one hand, if the user clicks on the Web page, the browser may request a new Web page corresponding to the Web URL the user clicks from the Web server, at the same time, query the mapping table to acquire a DTMF code corresponding to the IVR node, and send the DTMF code to the IVR server to obtain the new IVR voice. On the other hand, if the user performs key input according to the IVR voice, the browser may generate a DTMF code and send the DTMF code to the IVR server to acquire the new IVR voice, at the same time, query the mapping table to acquire the corresponding Web URL and request a new Web page from the Web server. The user may browse the new Web page and listen to the corresponding new voice at the same time.

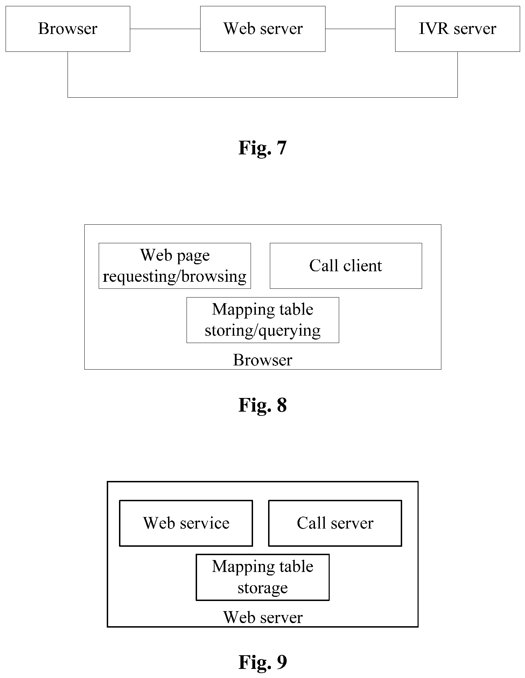

Fig. 7 is a system architecture diagram according to an embodiment of the present disclosure. As shown in Fig. 7, the system may include a browser. The browser may be configured to acquire from a Web server a mapping table of a mapping relationship among a URL of a Web page, an IVR node and a DTMF code. The browser may further be configured to receive an operation of clicking input on a Web from a user, and request a new Web page corresponding to the Web URL from the Web server, at the same time, query the mapping table to acquire a DTMF code corresponding to the IVR node, and send the DTMF code to the IVR server to acquire the new IVR voice. The browser may further be configured to receive a key input of a user, and generate a DTMF code and send the DTMF code to the IVR server to acquire a new IVR voice, at the same time, query the mapping table to acquire the corresponding Web URL and request a new Web page from the Web server.

Note that, a Web based IVR call may use the WebRTC mode directly supported by the browser or use the mode of adding a call function plug-in to the browser.

The system may further include a Web server. The Web server may be configured to store the mapping table, and provide the mapping table to the browser after receiving the request from the browser. The IVR server may be configured to provide a voice media to the browser, and receive the user input instruction to send the new voice.

There may be two forms of the mapping table of the URL of the Web page, the IVR node and the DTMF code. One is the form of absolute values of the URL of the Web page, an IVR node number and the DTMF code relative to an IVR root node, which is called the form of mapping table 1, as shown in Table 1.

For example, an insurance company may have three types of insurance, that is, human insurance, car insurance and property insurance. The life insurance may include sick insurance, accident insurance and other subtypes. There may be Web page introductions of these types of insurance and related IVR voice introductions in the Web server and the IVR server. Table 1 shows a form of mapping table 1. A DTMF code for returning to a previous IVR voice menu is 0 by default.

**Table 1**

| Web URL | IVR node number | DTMF code |
|---|---|---|
| | | |
| ../insurance/index.html | 0 | |
| ../insurance/human.html | 01 | 1 |
| ../insurance/car.html | 02 | 2 |
| ../insurance/property.html | 03 | 3 |
| ../insurance/human/disease.html | 011 | 11 |
| ../insurance/human/accident.html | 012 | 12 |
| ... | ... | ... |

Another form of mapping table is that the URL of the Web page and the IVR node number are stored as a table, and the current IVR node number, the next IVR node number and the DTMF code are stored as a table, which is called the form of mapping table 2. The same example is shown in the following Table 2.1 and Table 2.2.

**Table 2.1**

| Web URL | IVR node number |
|---|---|
| | |
| ../insurance/index.html | 0 |
| ../insurance/human.html | 01 |
| ../insurance/car.html | 02 |
| ../ insurance/property.html | 03 |
| ../insurance/human/disease.html | 011 |
| ../insurance/human/accident.html | 012 |
| ... | ... |

**Table 2.2**

| Current IVR node number | Next IVR node number | DTMF code |
|---|---|---|
| | | |
| 0 | 01 | 1 |
| 0 | 02 | 2 |
| 0 | 03 | 3 |
| 01 | 011 | 1 |
| 01 | 012 | 2 |
| 01 | 0 | 0 |
| 011 | 01 | 0 |
| ... | ... | ... |

Note that, the way of storing data only takes the table for example, there may be other ways of storing data, for example, an XML file.

Two forms of mapping table, and how two query the URL of the Web page, the IVR node number and the DTMF code are introduced below.

First, when browsing the Web page and listening to the IVR voice, the user may click on the Web page, at this point, the current Web URL and the next Web URL are known. Concerning how to query the mapping table to acquire the DTMF code from the current IVR node to the next IVR node, the following method may be adopted.

For the form of mapping table 1, the absolute DTMF codes corresponding to the current IVR node and the next IVR node may be acquired by querying Table 1. The values of two DTMF codes may be compared, and the same digits from the left to the right may be removed. Then the rest digits of the values of current DTMF codes are determined, and zeros may be filled in the desired values of DTMF codes according to the number of rest digits. At last, the next value of DTMF code with the same number of digits removed may be filled in the desired value of DTMF code to obtain the result. For example, the user may browse the Web page "../insurance/human/disease.html", and use the mouse to click on the page to jump to the next Web page "../insurance/human/accident.html". At this point, that the corresponding current IVR node is "011", and the next IVR node is "012" may be known by querying Table 1. The DTMF codes corresponding to the current IVR node and the next IVR node are "11" and "12" respectively. The two DTMF codes have a same digit from the left to the right, after the same digit is removed, there is 1 digit left in the current DTMF code, so a zero may be filled in the desired DTMF code, namely "0". The next DTMF code with the same digit removed is "2" and it is filled in the desired DTMF code, then the acquired DTMF code is "02" as a result. For another example, by querying Table 1, the current DTMF code is "23", and the next DTMF is "14", by using the above method, the acquired DTMF code is "0014" as a result.

For the form of mapping table 2, the current and the next IVR node numbers may be acquired by querying Table 2.1 according to the current and the next Web URLs, and the values of DTMF codes from the current IVR route to the next IVR route may be queried step by step from Table 2.2 according to the current and the next IVR node numbers. For example, the user may browse the Web page "../insurance/human/disease.html", and click on the page to jump to the next Web page "../insurance/human/accident.html". At this point, that the corresponding current IVR node is "011" and the next IVR node is "012" may be known by querying Table 2.1. Then, by querying Table 2.2, the route from "011" to "012" is "011 "-"01 "-"012", and the corresponding value of DTMF code is "02".

Moreover, when browsing the Web page and listening to the IVR voice, the user may press a keyboard or click a number key of a soft keyboard on a call client interface according to a voice prompt. At this point, the current IVR node and the value of DTMF code input by the user are known. Concerning how to query the mapping table to acquire the next Web URI, the following method may be adopted.

For the form of mapping table 1, a DTMF code corresponding to the current IVR node may be acquired by querying Table 1, a new value of DTMF code input by the user may be filled in the right of the DTMF code to obtain a new DTMF code. The next Web URL may be acquired by querying Table 1 based on the new DTMF code. For example, the user is listening to the voice of the IVR node "01", and the corresponding DTMF code is "1", at this point, the user may input the number key "2" according to the voice prompt, and want to listen to the voice of the IVR node "012", then the new DTMF code should be "12". At last, the next Web URL corresponding to the DTMF code "12" is determined to be "../insurance/human/accident.html" by querying Table 1.

For the form of mapping table 2, first the next IVR node number may be acquired by querying Table 2.2 according to the current IVR node and the new value of DTMF code input by the user, and then the next Web URL may be acquired by querying Table 2.1 according to the IVR node number. For example, the user is listening to the voice of the IVR node "01", and inputs the number key "2" according to the voice prompt, then the next IVR node number that the user wants to listen, namely "012", may be acquired by querying Table 2.2. After that, the next Web URL, namely "../insurance/human/accident.html", corresponding to the IVR node "012" may be acquired by querying Table 2.1.

By using the method in the embodiment of the present disclosure, the user may arbitrarily skip among different IVR voice nodes without repeatedly performing key input according to the voice prompt.

Fig. 8 is a structure diagram of the browser according to an embodiment of the present disclosure. As shown in Fig. 8, the browser may include a traditional Web page requesting/browsing function, a call client function and a mapping table storing/querying function. The call client may be configured to complete an IVR call function with the call server on the Web server and the IVR server. The mapping table storing/querying function may be configured to store the mapping table, and when the user is browsing and listening to the IVR voice, acquire the corresponding DTMF code according to Web input of the user, or acquire the corresponding Web URL according to DTMF input of the user.

The browser may run on hardware devices like a mobile terminal, a personal computer, a notebook computer, a set-top box, and a smart television.

Fig. 9 is a structure diagram of the Web server according to an embodiment of the present disclosure. The Web server may include a traditional Web service function, a call server function and a mapping table storing function. The Web service function may be configured to provide a Web service. The call server function may be configured to complete the IVR call function with the call client on the browser and the IVR server. The mapping table storing function may be configured to store the mapping table.

The above exemplary implementation process is further described below in combination the following four exemplary embodiments.

### First embodiment

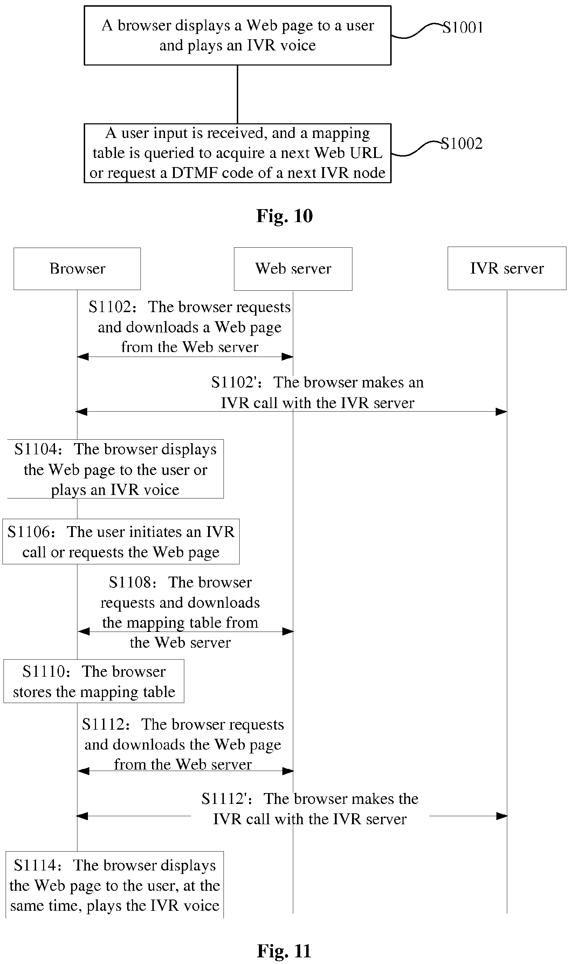

Fig. 10 is a flowchart of querying a mapping table according to an embodiment of the present disclosure. As shown in Fig. 10, the flow may include acts S1001 and S1002.

At act S1001, a browser may display a Web page to a user and plays an IVR voice.

At act S1002, a user input may be received, and a mapping table may be queried to acquire a next Web URL or request a DTMF code of a next IVR node.

### Second embodiment

Fig. 11 is a flowchart of downloading a mapping table according to an exemplary embodiment of the present disclosure. As shown in Fig. 11, the flow may include acts S1102 to S1114.

At act S1102, a browser may request and download a Web page from a Web server.

At act S1102', the browser may make an IVR call with an IVR server.

Note that, it is possible that only one of S1102 and S1102' is performed.

At act S1104, the browser may display the Web page to the user or play the IVR voice.

At act S1106, the user may initiate an IVR call or may request the Web page.

Note that, if the user is browsing the Web page in S1104, the user may initiate the IVR call in S1106; and if the user is making the IVR call in S1104, the user may request the Web page in S1106.

At act S1108, the browser may request and download the mapping table from a Web server.

At act S1110, the browser may store the mapping table.

At act S1112, the browser may request and download the Web page from a Web server.

At act S1112', the browser may make an IVR call with the IVR server.

Note that, S1112 and S1112' may be performed at the same time.

At act S1114, the browser may display the Web page to the user, and may play the IVR voice at the same time.

### Third embodiment

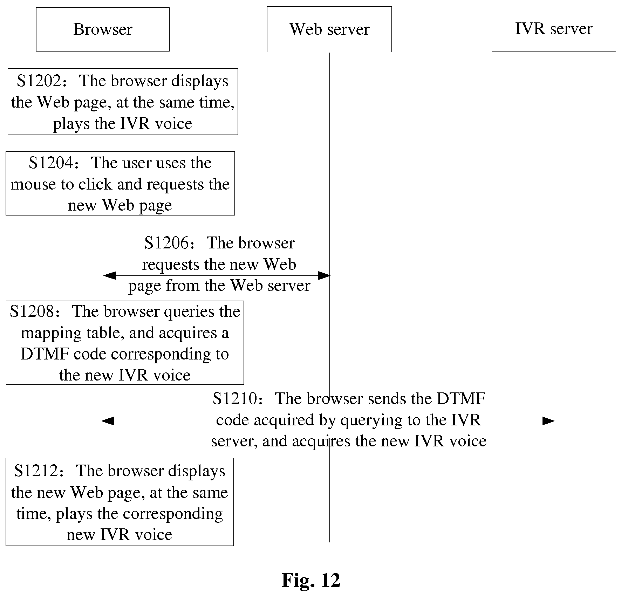

Fig. 12 is a flowchart that a user performs a Web page operation according to an embodiment of the present disclosure. As shown in Fig. 12, the flow may include acts S1202 to S1212.

At act S1202, a browser may display a Web page to a user, and may play a corresponding IVR voice at the same time.

At act S1204, the user may click and request a new Web page.

At act S1206, the browser may request the new Web page from a Web server.

At act S1208, the browser may query a mapping table, and acquire a DTMF code corresponding to a new IVR voice.

At act S1210, the browser may send the DTMF code acquired by query to an IVR server, and acquire the new IVR voice.

At act S1212, the browser may display the new Web page, and play the corresponding new IVR voice at the same time.

### Fourth embodiment

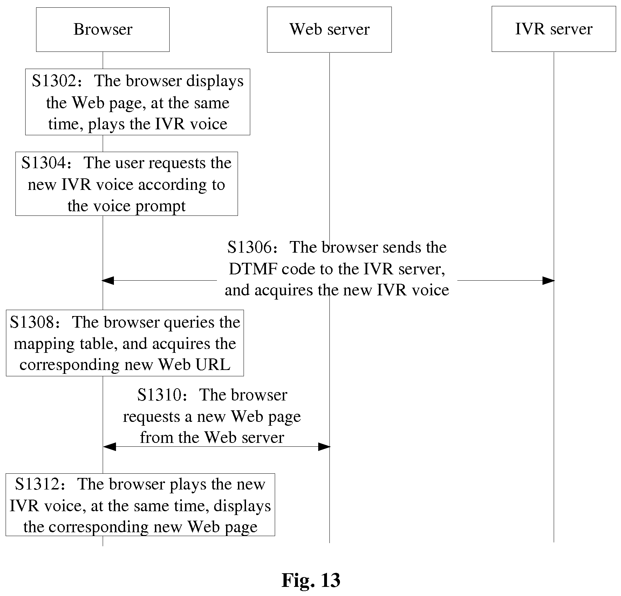

Fig. 13 is a flowchart that a user performs an IVR key operation according to an embodiment of the present disclosure. As shown in Fig. 13, the flow may include acts S1302 to S1312.

At act S1302, a browser may display a Web page to a user, and play a corresponding IVR voice at the same time.

At act S1304, the user may request a new IVR voice according to a voice prompt.

At act S1306, the browser may send a DTMF code to an IVR server, and acquire the new IVR voice.

At act S1308, the browser may query a mapping table, and acquire a corresponding new Web URL.

At act S1310, the browser may request a new Web page corresponding to the Web URL from a Web server.

At act S1312, the browser may play the new IVR voice, and may display the corresponding new Web page at the same time.

Note that, the above modules may be realized by means of software or hardware, and the latter may be realized by, but is not limited to, one of the following two ways. All the above modules may be in the same processor. Alternatively, the above modules may be in multiple processors respectively.

An embodiment of the present disclosure also provides a computer readable storage medium, in which a computer executable instruction may be stored. The computer executable instruction may perform the above method when being executed by the processor.

In an embodiment of the present disclosure, the computer readable storage medium may be configured to store program codes set to perform the following acts S1 to S3.

At act S1, a request operation for requesting acquisition of an IVR voice or a Web page may be received.

At act S2, a request for acquiring a Web page corresponding to the IVR voice or a request for acquiring an IVR voice corresponding to the Web page may be initiated according to a mapping relationship. The mapping relationship may be a mapping relationship between the Web page and the IVR voice.

At act S3, the Web page and the IVR voice may be displayed to a user.

In the embodiment of the present disclosure, the computer readable storage medium may include, but is not limited to, a USB flash disk, a Read-Only Memory (ROM), a Random Access Memory (RAM), a mobile hard disk, a magnetic disk or a compact disk, and other media which can store the program codes.

The specific examples in the present embodiment of the present disclosure may refer to the above embodiments and examples described in the optional implementation modes, which will not be repeated here.

Obviously, those skilled in the art should appreciate that the above modules and acts of the present disclosure can be implemented by a general-purpose computing device, and they can be centralized in a single computing device or distributed on a network composed of multiple computing devices. Optionally, they can be implemented by a program code which is capable of being executed by the computing device, so that they can be stored in a storage device and executed by the computing device. Alternatively, they can be made into integrated circuit modules, respectively, or multiple modules and acts of them can be made into a single integrated circuit module to implement. In this way, the present disclosure is not limited to any particular combination of hardware and software.

The above is only the exemplary embodiments of the present disclosure and not intended to limit the present disclosure; for those skilled in the art, the present disclosure may have various modifications and changes. Any modifications, equivalent replacements, improvements and the like within the principle of the present disclosure shall fall within the scope of protection defined by the appended claims of the present disclosure.

### Industrial Applicability

Some embodiments of the present disclosure provide an interactive processing method and device. According to the method, a request operation for requesting acquisition of an IVR voice or a Web page may be received; a request for acquiring a Web page corresponding to the IVR voice or a request for acquiring an IVR voice corresponding to the Web page may be initiated according to a mapping relationship between the Web page and the IVR voice; and the Web page and the IVR voice may be displayed to a user. By virtue of this solution, a problem in related technologies that a Web page and an IVR voice cannot be displayed synchronously may be solved, and the Web page and the IVR voice associated with each other may be displayed at the same time, thereby realizing the synchronization of the Web page and the IVR voice.

## Claims

1. An interactive processing method, comprising:
receiving a request operation for requesting acquisition of an Interactive Voice Response, IVR, voice or a Web page;
initiating, according to a mapping relationship, a request for acquiring a Web page corresponding to the IVR voice or a request for acquiring an IVR voice corresponding to the Web page, wherein the mapping relationship is a mapping relationship between the Web page and the IVR voice; and
displaying the Web page and the IVR voice to a user.

2. The method as claimed in claim 1, wherein the mapping relationship between the Web page and the IVR voice comprises a mapping relationship among a Uniform Resource Locator, URL, of the Web page, an IVR node and a Dual Tone Multiple Frequency, DTMF, code.

3. The method as claimed in claim 1 or 2, wherein initiating, according to the mapping relationship, the request for acquiring the Web page corresponding to the IVR voice comprises:
determining a DTMF code corresponding to the IVR voice according to the request operation;
acquiring a URL of the Web page corresponding to the IVR voice from the mapping relationship according to the DTMF code; and
acquiring the Web page according to the URL of the Web page.

4. The method as claimed in claim 1 or 2, wherein initiating, according to the mapping relationship, the request for acquiring the IVR voice corresponding to the Web page comprises:
acquiring a DTMF code of an IVR node corresponding to a URL of the Web page according to the mapping relationship;
sending the request for acquiring the IVR voice corresponding to the Web page to an IVR server according to the DTMF code; and
acquiring the IVR voice corresponding to the Web page, which is returned by the IVR server.

5. The method as claimed in claim 1, before initiating, according to the mapping relationship, the request for acquiring the Web page corresponding to the IVR voice or the request for acquiring the IVR voice corresponding to the Web page, further comprising:
downloading the mapping relationship.

6. The method as claimed in claim 1, before displaying the Web page and the IVR voice to the user, further comprising:
generating a DTMF code corresponding to the IVR voice according to the request operation, and acquiring the IVR voice from an IVR server according to the DTMF code; or,
acquiring the Web page from a Web server according to the request operation.

7. The method as claimed in any one of claims 1 to 6, wherein the mapping relationship comprises a mapping relationship recorded in a form of a table.

8. The method as claimed in any one of claims 1 to 6, wherein the mapping relationship comprises a mapping relationship recorded in a form of an Extensible Markup Language, XML, file.

9. The method as claimed in any one of claims 1 to 6, wherein displaying the Web page and the IVR voice to the user comprises:
displaying the Web page and the corresponding IVR voice, which are acquired through the request according to the mapping relationship, to the user; or, displaying the IVR voice and the corresponding Web page, which are acquired through the request according to the mapping relationship, to the user.

10. An interactive processing device, comprising:
a receiving module, which is configured to receive a request operation for requesting acquisition of an Interactive Voice Response, IVR, voice or a Web page;
a first acquiring module, which is configured to initiate, according to a mapping relationship, a request for acquiring a Web page corresponding to the IVR voice or a request for acquiring an IVR voice corresponding to the Web page, wherein the mapping relationship is a mapping relationship between the Web page and the IVR voice; and
a displaying module, which is configured to display the Web page and the IVR voice to a user.

11. The device as claimed in claim 10, wherein the mapping relationship between the Web page and the IVR voice comprises a mapping relationship among a Uniform Resource Locator, URL, of the Web page, an IVR node and a Dual Tone Multiple Frequency, DTMF, code.

12. The device as claimed in claim 10 or 11, wherein the first acquiring module comprises:
a determining unit, which is configured to determine a DTMF code corresponding to the IVR voice according to the request operation;
a first acquiring unit, which is configured to acquire a URL of the Web page corresponding to the IVR voice from the mapping relationship according to the DTMF code; and
a second acquiring unit, which is configured to acquire the Web page according to the URL of the Web page.

13. The device as claimed in claim 10 or 11, wherein the first acquiring module comprises:
a third acquiring unit, which is configured to acquire a DTMF code of an IVR node corresponding to a URL of the Web page according to the mapping relationship;
a sending unit, which is configured to send the request for acquiring the IVR voice corresponding to the Web page to an IVR server according to the DTMF code; and
a fourth acquiring unit, which is configured to acquire the IVR voice corresponding to the Web page, which is returned by the IVR server.

14. The device as claimed in claim 10, further comprising:
a downloading module, which is configured to download the mapping relationship.

15. The device as claimed in claim 10, further comprising:
a second acquiring module, which is configured to generate a DTMF code corresponding to the IVR voice according to the request operation, and acquire the IVR voice from an IVR server according to the DTMF code; or,
a third acquiring module, which is configured to acquire the Web page from a Web server according to the request operation.

16. The device as claimed in any one of claims 10 to 15, wherein the mapping relationship comprises a mapping relationship recorded in a form of a table.

17. The device as claimed in any one of claims 10 to 15, wherein the mapping relationship comprises a mapping relationship recorded in a form of an Extensible Markup Language, XML, file.

18. The device as claimed in any one of claims 10 to 15, wherein the displaying module is configured to display the Web page and the corresponding IVR voice, which are acquired through the request according to the mapping relationship, to the user, or display the IVR voice and the corresponding Web page, which are acquired through the request according to the mapping relationship, to the user.

19. A computer readable storage medium, in which a computer executable instruction is stored; the computer executable instruction performs a method as claimed in any one of claims 1 to 9 when being executed by a processor.
